# EUROPEAN PATENT SPECIFICATION

(11) **EP 3 486 596 B1**
(45) Date of publication and mention of the grant of the patent: **14.07.2021**
(21) Application number: 18460013.8
(22) Date of filing: 27.02.2018
(51) Int. Cl.: F28F 9/02, F16L 41/08, F16L 37/00, F24D 19/00, F16L 37/098, F16L 37/14

(54) **A PIPE FITTING FOR CONNECTING PIPES TO A DEVICE, ESPECIALLY A STUB PIPE FOR A HEAT EXCHANGER**
ROHRVERSCHRAUBUNG ZUM VERBINDEN VON ROHREN MIT EINER VORRICHTUNG, INSBESONDERE EINEM ANSCHLUSSSTUTZEN FÜR EINEN WÄRMETAUSCHER
RACCORD DE TUYAU POUR RACCORDER DES TUYAUX À UN DISPOSITIF, NOTAMMENT UN TRONÇON DE TUYAU POUR UN ÉCHANGEUR DE CHALEUR

(30) Priority: 01.03.2017 PL 42069317
(43) Date of publication of application: 22.05.2019
(73) Proprietor: AIC Spólka Akcyjna, 81-577 Gdynia (PL)
(72) Inventor: Kuzma, Mariusz, 81-757 Sopot (PL); Oryl, Michal, 09-303 Syberia (PL); Wantoch-Rekowski, Daniel, 84-230 Rumia (PL)
(74) Representative: Pomianek, Grazyna

(56) References cited:
- WO-A2-2013/141729
- DE-A1- 2 939 081
- DE-A1- 4 014 469
- DE-A1- 4 407 262
- DE-A1- 19 621 283
- DE-B3-102010 032 694
- DE-C1- 19 804 719
- GB-A- 1 313 069
- US-A- 4 887 849
- US-A- 6 149 206
- US-B1- 6 267 416

## Description

The invention concerns a pipe fitting for connecting pipes to a device, especially a stub pipe for a heat exchanger, used in particular to connect the pipes which supply and/or discharge water to/from the heat exchanger in heating installations and/or domestic water installations, household installations in particular.

Known from document DE 4 407 262 A1 is an element for the connection to a cylindrical body, intended for a liquid or gas medium, made of plastic and having a pass-through opening which features fixing tongues on the side of the connection to the said body, where once the tongues are inserted into the opening in the cylindrical body and get settled in the body, they are pressed against the body with an expansion sleeve which is then placed in the opening of the connection element. In addition, the connection is sealed with a gasket fitted in the cylindrical recess under the fixing tongues.

Known from document WO 2013/141729 A2 is a plastic connection stub pipe of a heat exchanger. The stub pipe is given the form of a body fitted with a pipe coupling of any type on the one end, and an end piece on the other, where the end piece is press-fitted in the assembly opening in the heat exchanger jacket. The assembly end piece is given the form of a flared ring-shaped flange with four notches between which hook-shaped snaps are formed. The assembly end piece is fitted with an expansion element in the form of a rigid sleeve or a resilient ring securing the connection.

Formed under the assembly end piece is a flange with a groove to accommodate a gasket. Each of these two documents shows a pipe fitting according to the preamble of claim 1.

The purpose of the invention is to develop a structure of a pipe fitting intended to connect a pipe to a device, in particular a stub pipe for a heat exchanger, ensuring swift, tight, and secure connection.

A pipe fitting according to the invention is defined by claim 1.

The body and the snaps can either be integrated in a single element, or the body and the snaps can make up at least two elements connected to each other, where the body is one of the elements, and the snaps are formed into either single elements, or two or even a number of elements.

The front surface of the body wall on the side of the teeth can either be flat, or formed into any shape, preferably cylindrical or conical.

Preferably, the front surface of the flange of the body can be either flat, or formed into any shape, preferably cylindrical or conical.

Preferably, the fitting is fitted with a snap arm expansion sleeve.

Preferably, the expansion sleeve is fitted with a pin resembling letter 'U', where the inner sections of its arm edges are arched forming sections of a ring the inner diameter of which corresponds to the outer diameter of the expansion sleeve, and where there are two transverse openings made in the body below the snap arms to accommodate the arms of the said pin.

Preferably, there is at least one flange formed on the external side surface of the expansion sleeve.

Preferably, formed under the snap arms is a ring-shaped support surface for the flange of the expansion sleeve.

Preferably, between the flange of the expansion sleeve and the flange support surface there is a gasket, preferably circular or square in cross section, or a lip seal with one lip or more.

The fitting features a pipe coupling to connect the fitting to the pipe, where the coupling can be an element of either the expansion sleeve, or the body.

The connection between a pipe, in particular the pipe supplying and/or discharging water to/from a water heat exchanger, can be achieved by way of a pipe coupling of any known type, preferably a threaded, flange, or quick-release coupling.

The fitting according to the invention ensures tight connection between the pipe and the device, in particular the connection of the pipes which supply and/or discharge water to/from a heat exchanger in heating and/or domestic water installations, household installations in particular.

Further benefits and advantages of the present invention will become apparent after a careful reading of the detailed description with appropriate reference to the accompanying drawings.

In the drawings:

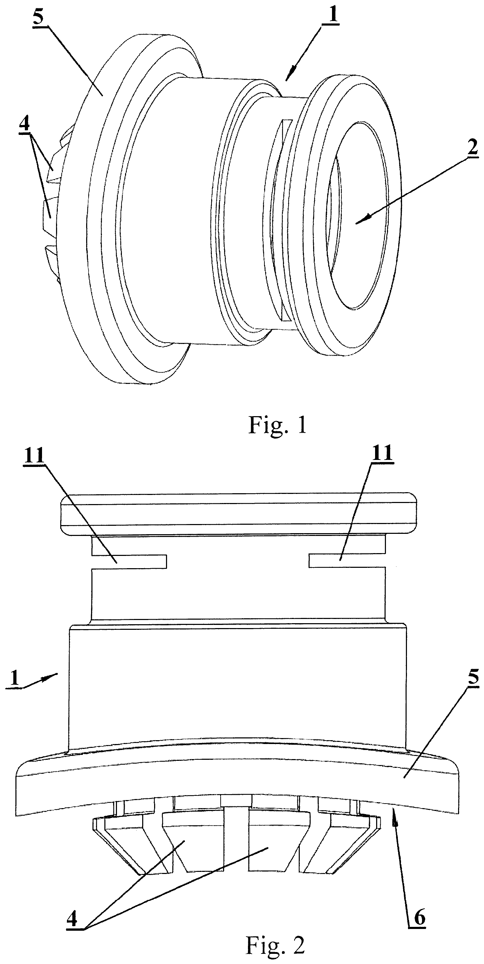

Fig. 1 shows the fitting body in a perspective view;

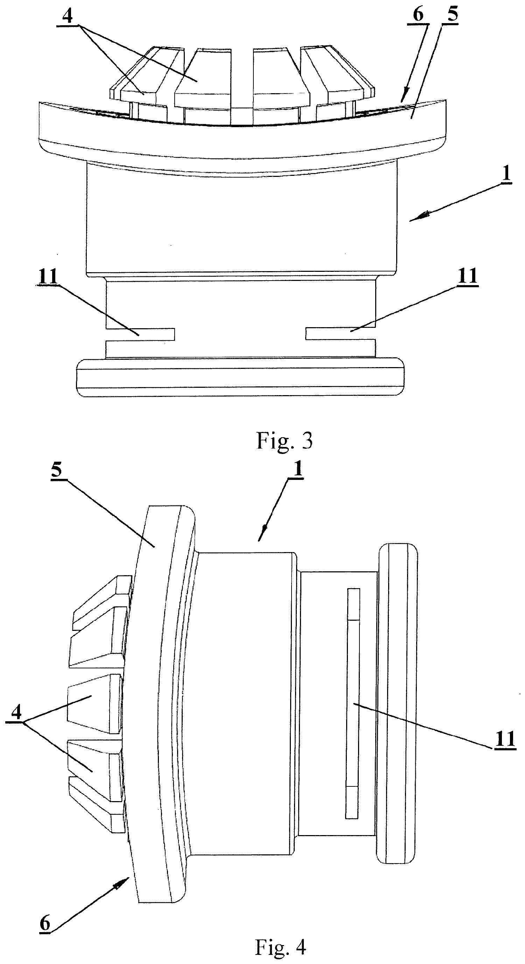

Fig. 2 to Fig. 4 present the fitting in side view;

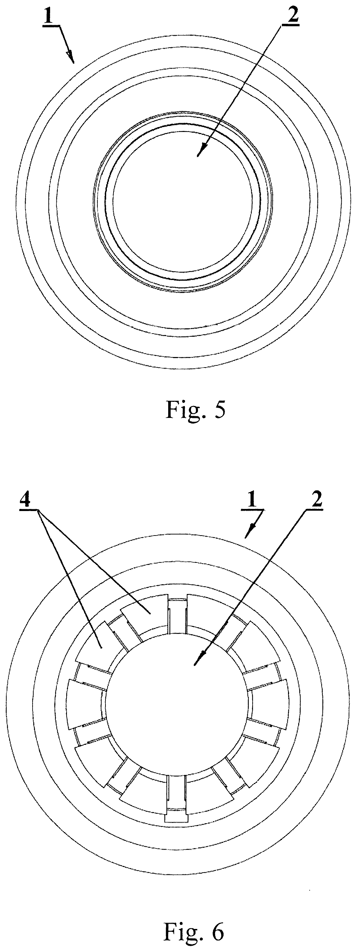

Fig. 5 depicts the fitting seen from the side opposite to the teeth;
Fig. 6 shows the fitting seen from the side of the teeth;
Fig. 7 presents the fitting in which the body and the snaps constitute separate elements shown in an axial half-view / half cross section;
Fig. 8 shows the fitting in which the body and the snaps constitute two separate elements, and in which the body features pipe coupling in the form of a thread, presented in an axial half-view/ half cross section;
Fig. 9 depicts the fitting featuring an expansion sleeve, in an axial half-view/ half cross section;
Fig. 10 shows the fitting where the body and the snaps are integrated in a single element, with an expansion sleeve in place, presented in axial half-view / half cross section;
Fig. 11 depicts the fitting where the body and snaps constitute separate elements, with a ring-shaped gasket fitted on the cylindrical surface in the flange of the body, and with an expansion sleeve and a gasket in place, in axial half-view / half cross section;
Fig. 12 presents the fitting in which the body and the snaps constitute separate elements, with a triple-lip seal fitted on the cylindrical surface in the flange of the body, and with an expansion sleeve in place, in axial half-view / half cross section;
Fig. 13 and Fig. 14 show the fitting fitted on the cylindrical surface, with an expansion sleeve in place, the sleeve featuring an end piece for the connection of a pipe, in axial half-view / half cross section;
Fig. 15 depicts the fitting fitted on cylindrical surface shown in side view;
Fig. 16 presents the fitting fitted on cylindrical surface, with an expansion sleeve in place, the sleeve featuring a pipe coupling, all shown in side view;
Fig. 17 shows the expansion sleeve with a single flange in axial half-view / half cross section;
Fig. 18 presents the expansion sleeve shown in perspective view, and the pipe coupling;
Fig. 19 and Fig. 20 show the pin in perspective view;
Fig. 21 presents the fitting where the body and snaps constitute separate elements with expansion sleeve in place, the sleeve featuring the pipe coupling, all shown in axial half-view / half cross section.

An exemplary pipe fitting comprises a body 1 with an axial pass-through opening 2 and is fitted with pipe coupling 15, 16 on the one end to connect the fitting to a pipe, such as a pipe which supplies or discharges water to/from a heat exchanger, and with snaps on the other end to connect the fitting to the opening in the wall 18 of a heat exchanger jacket.

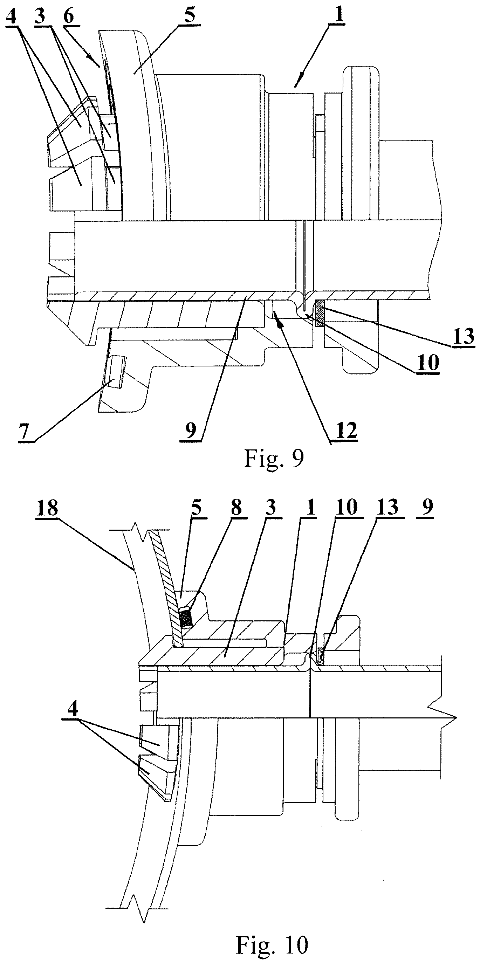

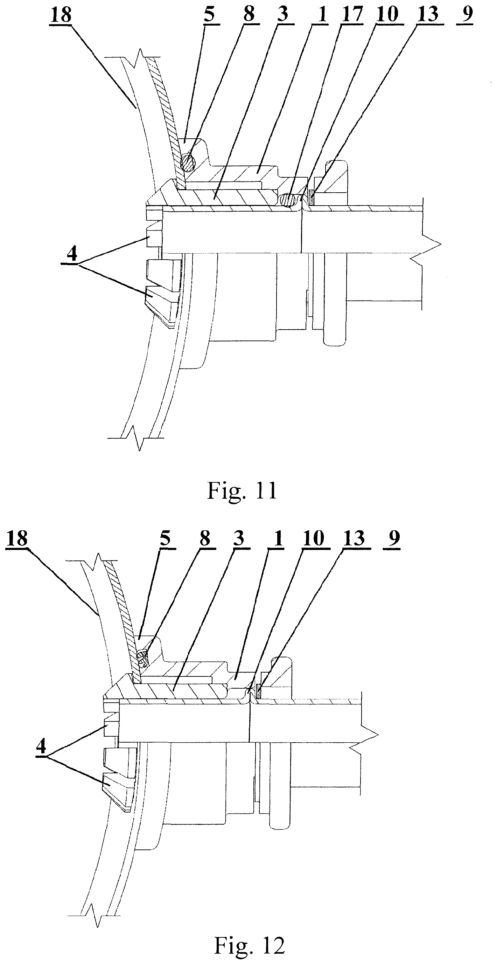

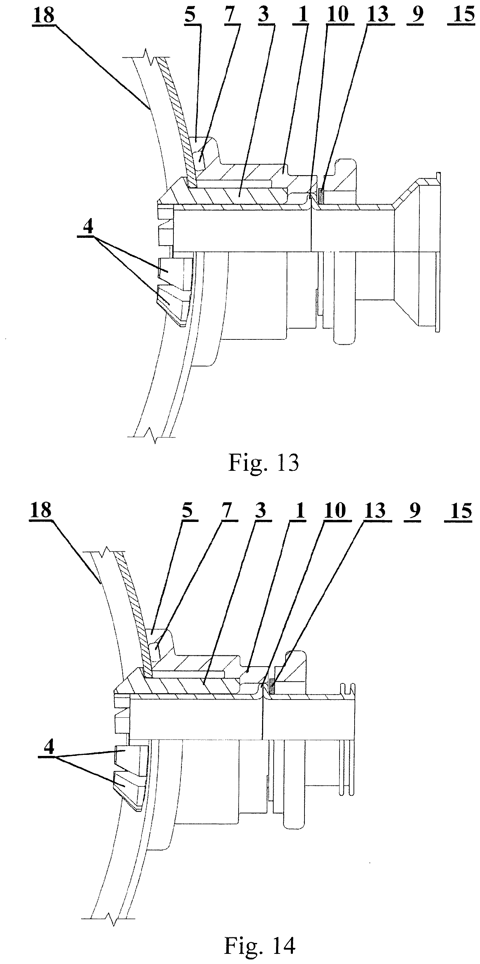

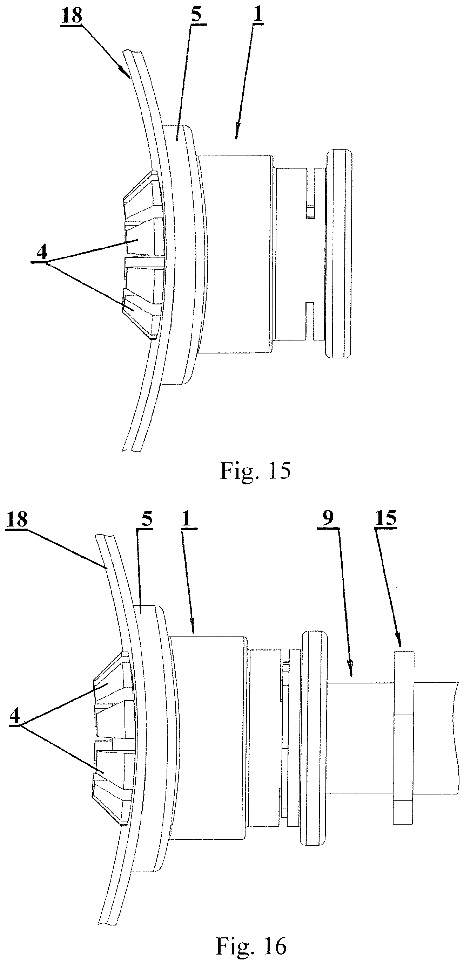

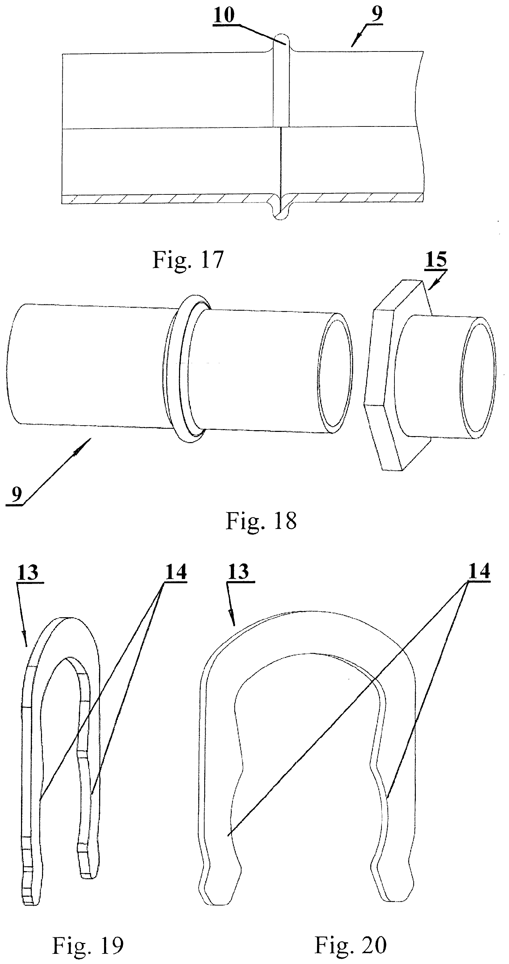

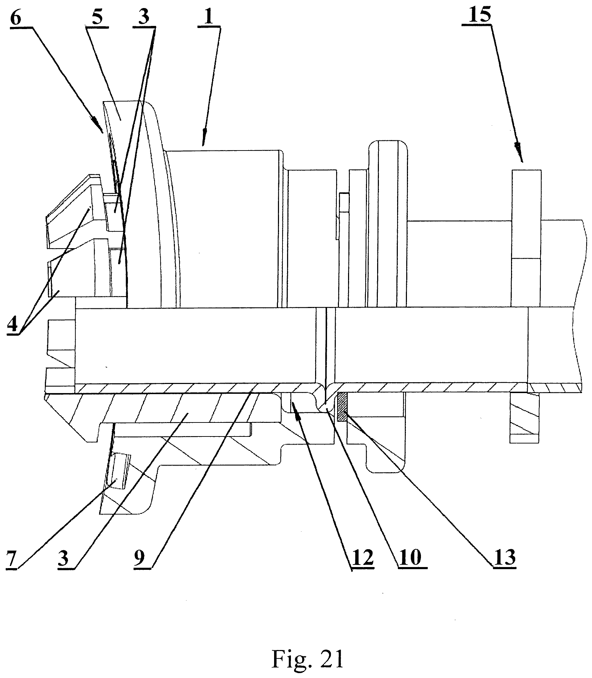

In the first example the snaps shaped into arms 3 arranged axially around a rim of the cylindrical wall of the pass-through opening 2 in the body 1 at a short radial distance from the cylindrical wall of the body 1, where each arm 3 is connected to the rim of that cylindrical wall of the pass-through opening 2 in the body 1 on the one end, and features a tooth 4 on the other free end, the tooth extending above the pass-through opening in the body 1. On the side of the teeth 4, the body 1 is ended with a flange 5, the front surface 6 of which is cylindrical and enables precision fitting of the front surface 6 of the flange 5 to match the cylindrical surface 18 of the heat exchanger jacket, as shown on Fig. 10 to Fig. 12. Formed in the flange 5 is a socket 7 to accommodate a gasket 8 which seals the connection between the fitting and the heat exchanger jacket. The gasket can be either flat and rectangular in cross-section, as shown on Fig. 10, or circular in cross-section, as shown on Fig. 11, or take the form of a three-lipped seal, as shown on Fig. 12. The pipe fitting is fitted with an expansion sleeve 9 of the snap arms 3, where the sleeve presses against the arms 3. There is a flange 10 formed on the external side surface of the expansion sleeve 9. Formed under the snap arms 3 is a ring-shaped support surface 12 for the flange 10 of the expansion sleeve 9, where between the said flange 10 and the support surface 12 there is also a gasket 17, as shown on Fig. 11. In the body 1, below the arms 3, there are two transverse openings 11 positioned opposite each other to accommodate the arms of the pin 13, the shape of which resembles letter 'U', where the inner sections of its arm edges are arched forming sections of a ring 14, the inner diameter of which corresponds to the outer diameter of the expansion sleeve 9, which stabilizes the expansion sleeve in place. On the end which extends beyond the body 1, the expansion sleeve is fitted with a pipe coupling 15, as shown on Fig. 13, Fig. 14, Fig. 16, Fig. 18, and Fig. 21, to connect the fitting to a pipe. In another variant (not shown on the drawing) there may be more than one flange 10 fitted on the external side surface of the expansion sleeve 9.

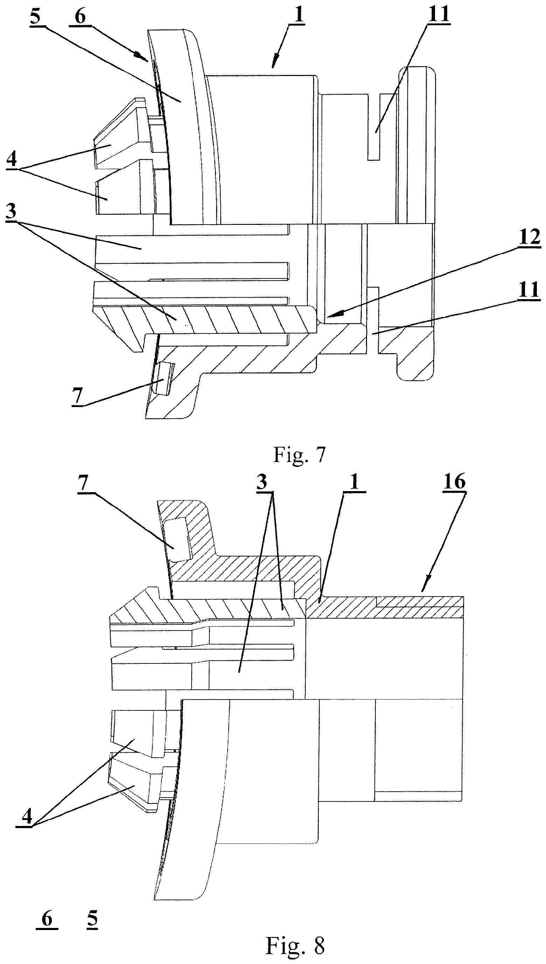

In the second exemplary embodiment in which the expansion sleeve is shorter than the body 1, or there is no expansion sleeve at all, the fitting differs from that described in example one in that on the side opposite to the teeth 4 the body 1 is fitted with a pipe coupling 16 to connect the fitting to a pipe, as shown on Fig. 8.

In the third and fourth exemplary embodiments of the invention (not presented on the drawing) the fitting differs form that described in example one and two, respectively, in that the front surface of the body flange forms a single plane, and the surface of the jacket of the heat exchanger to which the fitting is connected is flat, thanks to which the front surface of the flange and the flat surface of the heat exchanger jacket fit tightly together.

In the fitting described in examples one and two, the body and snaps can either be integrated in a single element, or the body 1 constitutes one part, whereas the snaps constitute the other part, where the snaps are connected one to another with ends of their arms 3 on the side opposite to the teeth 4. In yet another variant, the snaps may be made up of two or several parts, where in each of the parts, the ends of the arms 3 of the snaps on the side opposite to the teeth 4 are connected to one another. The connection between the said fitting parts, which can be made e.g. of plastic, can be either detachable or non-detachable.

The fitting described in example one is fitted to the device and the pipe as follows. Arms 3 of the snaps on the side of the teeth 4 are pressed into the opening in e.g. jacket 18 of the heat exchanger to which e.g. a pipe supplying or discharging water is to be connected, and the pressing continues until the moment the teeth 4 land on the other side of the opening. Once the teeth 4 are pressed in, the arms extend reaching their original position, and the teeth 4 prevent the fitting from spontaneous falling out of the opening. Then, the expansion sleeve 9 is inserted through the axial opening 2 in the body 1, whereupon fitted on the body 1 at the level of the transverse openings 11 is a pin 13 the shape of which resembles letter 'U' so that the arms of the said pin 13 are inserted in the transverse opening 11, thus stabilizing the expansion sleeve 9 in place. The expansion sleeve 9 additionally prevents the fitting from falling out of the opening. In the next step the pipe is connected to the other end of the expansion sleeve or to the body via a pipe coupling of any type, such as a threaded, flange, or quick-release coupling.

The described examples do not exhaust the possible variants of embodiment of the described invention.

### List of reference numbers

1. body
2. axial opening in the body
3. snap arms
4. snap teeth
5. flange of the body
6. front surface of the flange
7. socket to accommodate the gasket
8. gasket of the body flange
9. expansion sleeve
10. flange of the expansion sleeve
11. transverse openings in the body
12. support surface in the body
13. pin
14. ring-shaped sections of the pin
15. coupling between the expansion sleeve and the pipe
16. coupling between the body and the pipe
17. gasket of the expansion sleeve flange
18. surface of the connected device

## Claims

1. A pipe fitting intended to connect a pipe to a device, in particular a stub pipe for a heat exchanger intended to connect water supply and/or discharge pipes, comprising a body (1) with an axial pass-through opening (2) and fitted with a pipe coupling of any type on the one end to connect the fitting to a pipe, and with snaps on the other end to connect the fitting to the opening in the wall of the connected device, heat exchanger in particular, where the snaps are shaped into arms (3) arranged axially around a rim of the cylindrical wall of the pass-through opening (2) in the body (1), where each arm (3) is connected to that cylindrical wall of the pass-through opening (2) in the body (1) on the one end, and features a tooth (4) on the other free end of each arm (3), the tooth (4) extending above the pass-through opening (2) in the body (1), **characterised in that** the body (1) comprises a portion which forms a jacket around the snap arms (3) at a short radial distance thereof, the jacket ending with a flange (5) including a socket (7) for accommodating a gasket (8).

2. The fitting according to Claim 1, **characterised in that** the body (1) and the snaps are integrated in a single element.

3. The fitting according to Claim 1, **characterised in that** the body (1) and the snaps make up at least two elements connected to each other, where the body (1) is one of the elements.

4. The fitting according to Claim1, **characterised in that** the front surface of the wall of the body (1) on the side of the teeth (4) is cylindrical or conical or flat.

5. The fitting according to Claim 1, **characterised in that** the front surface (6) of the flange (5) is cylindrical-or conical or flat.

6. The fitting according to each of Claims 1 to 5, **characterised in that** it is fitted with an expansion sleeve (9) of arms (3) of the snaps.

7. The fitting according to Claim 6, **characterised in that** the expansion sleeve (9) is fitted with a pin (13) resembling letter 'U', where the inner sections of its arm edges are arched forming sections of a ring (14) the inner diameter of which corresponds to the outer diameter of the expansion sleeve (9), and where there are two transverse openings (11) made in the body (1) below the arms (3) of the snaps to accommodate the arms of the said pin (13).

8. The fitting according to Claim 6 or 7, **characterised in that** there is at least one flange (10) formed on the external side surface of the expansion sleeve (9).

9. The fitting according to Claim 8, **characterised in that** formed under the arms (3) of the snaps is a ring-shaped support surface (12) for the flange (10) of the expansion sleeve (9).

10. The fitting according to Claim 9, **characterised in that** between the flange (10) of the expansion sleeve (9) and the surface (12) supporting the flange (9), there is a gasket (17), preferably circular or square in cross section, or a lip seal with one lip or more.

11. The fitting according to each of Claims 6 to 9, **characterised in that** the expansion sleeve (9) is fitted with a pipe coupling (15) to connect it to the pipe.

12. The fitting according to each of Claims 1 to 10, **characterised in that** the body (1) is fitted with a pipe coupling (16) to connect it to the pipe.

## Patentansprüche

1. Eine Rohrverschraubung zum Verbinden von Rohren mit einer Vorrichtung, insbesondere einem Anschlussstutzen für einen Wärmetauscher zum Verbinden von Wasserzuleitungen und Wasserableitungen mit einem Körper (1) mit einer axialen Durchgangsöffnung (2) und an einem Ende mit einem beliebigen Rohranschluss zum Anschließen einer Rohrleitung und am anderen Ende mit einem Schnappverschluss zum Anschluss an eine in der Wand des anzuschließenden Gerätes, insbesondere des Wärmetauschers, hergestellten Anschlussöffnung, wobei der Schnappverschluss in Form von Armen (3) ausgebildet ist, die axial um den Rand der zylindrischen Wand der Durchgangsöffnung (2) im Körper (1) angeordnet sind, wobei jeder Arm (3) mit einem Ende mit dieser zylindrischen Wand der Durchgangsöffnung (2) im Körper (1) verbunden ist und das andere freie Ende jedes Arms (3) mit einem Schappzahn (4) abgeschlossen ist, wobei der Schappzahn (4) über die Durchgangsöffnung (2) im Körper (1) herausragt, **dadurch gekennzeichnet, dass** der Körper (1) einen Teil umfasst, der einen Mantel um die Arme (3) in einem kleinen radialen Abstand davon bildet, wobei der Mantel mit einem Flansch (5) abgeschlossen ist, der einen Sitz (7) für eine Dichtung (8) enthält.

2. Die Rohrverschraubung nach Anspruch 1, **dadurch gekennzeichnet, dass** der Körper (1) und der Schnappverschluss miteinander verbunden sind und ein einziges Bauteil bilden.

3. Die Rohrverschraubung nach Anspruch 1, **dadurch gekennzeichnet, dass** der Körper (1) und der Schnappverschluss mindestens aus zwei miteinander verbundenen Teilen bestehen, wobei der Körper (1) eines der Teile ist.

4. Die Rohrverschraubung nach Anspruch 1, **dadurch gekennzeichnet, dass** die Stirnfläche der Körperwand (1) auf der Zahnseite (4) zylindrisch oder konisch oder flach ausgebildet ist.

5. Die Rohrverschraubung nach Anspruch 1, **dadurch gekennzeichnet, dass** die Stirnfläche (6) des Flansches (5) zylindrisch oder konisch oder flach ausgebildet ist.

6. Die Rohrverschraubung nach jedem der Ansprüche von 1 bis 5 **dadurch gekennzeichnet, dass** sie mit einer Spreizhülse (9) für die Arme (3) des Schnappverschlusses versehen ist.

7. Die Rohrverschraubung nach Anspruch 6, **dadurch gekennzeichnet, dass** die Spreizhülse (9) mit einer U-förmigen Spange (13) versehen ist, deren innenliegende Abschnitte der Armkanten bogenförmig ausgebildet sind und Ringabschnitte (14) formen mit einem Innendurchmesser, der dem Außendurchmesser der Spreizhülse (9) entspricht und im Körper (1) unterhalb der Arme (3) des Schnappverschlusses zwei querliegende Öffnungen (11) vorhanden sind, in denen die Arme der oben genannten Spange (13) angeordnet sind.

8. Die Rohrverschraubung nach Anspruch 6 oder 7, **dadurch gekennzeichnet, dass** die Spreizhülse (9) an der äußeren seitlichen Fläche mindestens einen Flansch (10) aufweist.

9. Die Rohrverschraubung nach Anspruch 8, **dadurch gekennzeichnet, dass** eine ringartige Stützfläche (12) unter den Armen (3) des Schnappverschlusses für den Flansch (10) der Spreizhülse (9) ausgebildet ist.

10. Die Rohrverschraubung nach Anspruch 9 **dadurch gekennzeichnet, dass** zwischen dem Flansch (10) der Spreizhülse (9) und der Stützfläche (12) für den Flansch (9) eine Dichtung (17) liegt, die bevorzugt einen runden oder quadratischen Querschnitt aufweist oder als eine Lippe mit mindestens einer Lippe ausgebildet ist.

11. Die Rohrverschraubung nach jedem der Ansprüche von 6 bis 9, **dadurch gekennzeichnet, dass** die Spreizhülse (9) mit einem Rohranschluss (15) zum Anschluss an die Leitung versehen ist.

12. Die Rohrverschraubung nach jedem der Ansprüche von 1 bis 10 **dadurch gekennzeichnet, dass** der Körper (1) mit einem Rohranschluss (16) zum Anschließen einer Rohrleitung versehen ist.

## Revendications

1. Raccord de tuyau pour raccorder des tuyaux à un dispositivf, notamment un tronçon de tuyau pour un échangeur de chaleur pour raccorder des tuyaux pour alimenter et/ou évacuer de l'eau, comprenant le corps (1) avec un trou axialement traversant (2) et équipé à n'importe quel raccordement de tuyau à une extrémité pour le raccordement avec le tuyau et à l'autre à clips pour le raccordement à une ouverture realisée dans la paaroi de l'appareil connecté, en particulier un échangeur de chaleur, où les clips sont en forme de bras (3) situé axialement autour de la périphérie de la paroi cylindrique du trou traversant (2) dans le corps (1), où chaque bras (3) à une extrémité est relié à la paroi cylindrique du trou traversant (2) dans le corps (1), et l'autre extrémité libre de chaque bras (3) se termine par une dent (4), la dent (4) fait saillie au-dessus du trou traversant (2) dans le corps (1), **caractérisé en ce que** le corps (1) comprend une partie qui forme un manteau autour des bras (3) dudit clip à une courte distance radiale de ceux-ci, le manteau se termine par un collier (5) contenant un siège (7) pour un joint (8).

2. Raccord selon la revendication 1, **caractérisé en ce que** le corps (1) et les clips sont reliés et constituent une seule pièce.

3. Raccord selon la revendication 1, **caractérisé en ce que** le corps (1) et les clips constituent au moins deux parties reliées l'une à l'autre, le corps (1) étant l'un des composants.

4. Raccord selon la revendication 1, **caractérisé en ce que** la face du corps (1) côté dent (4) est cylindrique ou conique ou plate.

5. Raccord selon la revendication 1, **caractérisé en ce que** le collier (5) est cylindrique ou conique ou plate.

6. Raccord selon l'une quelconque des revendications de 1 à 5, **caractérisé en ce qu'**il est pourvu d'un manchon d'expansion (9) des bras (3) dudit clip.

7. Raccord selon la revendication 6, **caractérisé en ce que** le manchon d'expansion (9) est équipé d'un boucle (13) de forme similaire à la lettre "U", les sections internes des bords des bras ayont une forme arquée formant des sections d'anneau (14) avec un diamètre intérieur correspondant au diamètre extérieur du manchon d'expansion (9), et deux ouvertures transversales (11) dans lesquelles se trouvent les bras dudit boucle (13) se trouvent dans le corps (1) sous les bras (3) dudit clip.

8. Raccord selon la revendication 6 ou 7, **caractérisé en ce que** le manchon d'expansion (9) présente au moins une bride (10) sur sa surface latérale extérieure.

9. Raccord selon la revendication 8, **caractérisé en ce qu'**une surface de butée annulaire (12) pour le collier (10) du manchon d'expansion (9) est formée sous les bras (3) dudit clip.

10. Raccord selon la revendication 9, **caractérisé en ce qu'**entre la bride (10) du manchon d'expansion (9) et la surface de butée (12) pour la bride (9), il y a un joint (17) de préférence de section transversale circulaire ou carrée ou à lèvre % avec au moins une lèvre.

11. Raccord selon l'une quelconque des revendications de 6 à 9, **caractérisé en ce que** le manchon d'expansion (9) est pourvu d'un joint de tuyau (15) pour le raccordement aux tuyaux.

12. Raccord selon l'une quelconque des revendications de 1 à 10, **caractérisé en ce que** le corps (1) est pourvu d'une connexion tubulaire (16) pour la connexion aux tuyaux.
